# EUROPEAN PATENT APPLICATION

(11) **EP 4 848 741 A1**
(43) Date of publication of application: **02.12.2026**
(21) Application number: 26166403.1
(22) Date of filing: 20.03.2026
(51) Int. Cl.: H04N 23/51, H04N 23/50, H04N 23/54, H04N 23/55, H04N 23/57, B60R 11/04, G03B 30/00

(54) **CAMERA**

(30) Priority: 26.05.2025 CN 202521054577 U
(71) Applicant: Sharetronic Data Technology Co., Ltd., Shenzhen, Guangdong 518000 (CN)
(72) Inventor: Geng, Kangming, Shenzhen City, Guangdong Province, 518000 (CN); Yi, Zhou, Shenzhen City, Guangdong Province, 518000 (CN); Qu, Zhaotian, Shenzhen City, Guangdong Province, 518000 (CN); Liu, Jianfei, Shenzhen City, Guangdong Province, 518000 (CN)
(74) Representative: Petraz, Gilberto Luigi

(57) **Abstract**

The present disclosure relates to a camera, including a lens assembly and a housing. The lens assembly includes a lens and a circuit board assembly connected to the lens. The housing includes a first housing and a second housing. The first housing and the second housing are connected to form a first accommodating space for accommodating the lens assembly. A first end surface of the first housing facing the second housing is inclined relative to a second end surface of the first housing facing away from the second housing. An inclined protrusion of the second housing protrudes towards the first housing. A third end surface of the inclined protrusion defines a first through hole for lens extending through. An unique inclined arrangement enables effective adaptation when installed on a carrier such as second-floor transparent glass, ensuring the lens can acquire the desired field of view at an optimal angle.

## Description

### CROSS-REFERENCE TO RELATED APPLICATIONS

The application claims priority to and benefits of Chinese Application Patent Application No. 2025210545770, filed on May 26, 2025, the entire disclosure of which is hereby incorporated by reference.

### TECHNICAL FIELD

The present disclosure relates to a camera, and in particular relates to a tilt-mounted camera.

### BACKGROUND

For conventional fixed-angle cameras, once installed, they can only capture images in a specific direction and range. While some adjustable-angle cameras exist, their adjustment capabilities are limited, typically allowing only minor horizontal or vertical angle modifications within a narrow range. For instance, in the security monitoring of multi-story buildings, when a camera installed on the second floor needs to monitor the first floor, existing camera systems often struggle to achieve precise and comprehensive coverage.

### SUMMARY

In view of this, the present disclosure provides a camera, to solve at least one of above technical problems of the prior art.

To solve the at least one of above technical problems, the present disclosure provides a camera. The camera may include a lens assembly and a housing. The lens assembly may include a lens and a circuit board assembly connected to the lens. The housing may include a first housing and a second housing. The first housing and the second housing are connected on opposing sides to form a first accommodating space. The lens assembly is received within the first accommodating space. A first end surface of the first housing facing the second housing is inclined relative to a second end surface of the first housing facing away from the second housing. An inclined protrusion located on one side of the second housing facing the first housing protrudes towards the first housing. A third end surface of the inclined protrusion defines a first through hole penetrating through the inclined protrusion. The lens extends through the first through hole.

Therefore, in the camera of the present disclosure, the lens is connected to the circuit board assembly, and combined with the inclined structure of the housing, an unique inclined arrangement is formed in the overall structure, enabling effective adaptation when installed on a carrier such as second-floor transparent glass. The camera can adjust a shooting angle to capture images of the first floor, ensuring the lens can acquire a desired field of view at an optimal angle.

### BRIEF DESCRIPTION OF THE ACCOMPANYING DRAWINGS

To describe the technology solutions in the embodiments of the present disclosure more clearly, the following briefly introduces the accompanying drawings required for describing the embodiments. Obviously, the accompanying drawings in the following description show merely at least one embodiment of the present disclosure, those of ordinary skilled in the art may also obtain other drawings based on these drawings without any creative efforts.
FIG. 1 illustrates an overall structural view of a camera in accordance with at least one embodiment of the present disclosure.
FIG. 2 illustrates an exploded view of the camera shown in FIG. 1.
FIG. 3 illustrates another exploded view of the camera shown in FIG. 1.
FIG. 4 illustrates a cross-sectional view of a partial structure of the camera shown in FIG. 2.
FIG. 5 illustrates a partial exploded structural view (1) of the camera shown in FIG. 2.
FIG. 6 illustrates a cross-sectional view of the camera shown in FIG. 1.
FIG. 7 illustrates a partial exploded structural view (2) of the camera shown in FIG. 2.
FIG. 8 illustrates another cross-sectional view of the camera shown in FIG. 1.
FIG. 9 illustrates a partial exploded structural view (3) of the camera shown in FIG. 2.

The reference numbers in the detailed description are as follows:
Camera 100; housing 101; first housing 110; first sub-housing 111; second sub-housing 112; first accommodating space 113; second housing 120; inclined protrusion 121; first through hole 122; second accommodating space 123; reinforcing rib 124; lens assembly 130; circuit board assembly 131; lens 132; connecting member 140; first connecting member 141; second connecting member 142; third through hole 143; fourth through hole 144; light-shielding portion 145; reset assembly 150; reset button 151; trigger actuator 152; reset functional component 153; reset hole 154; positioning structure 160; first connecting column 161; connection through hole 162; second connecting column 163; main body portion 1631; connecting end 1632; first snap structure 111a; snap groove 112a; first positioning edge 111b; second positioning edge 112b; protrusion structure 112c; third snap structure 120c; microphone 133; second through hole 114; charging port 115; fifth through hole 116; sixth through hole 117; voice port 111c; angle θ.

### DETAILED DESCRIPTION OF ILLUSTRATED EMBODIMENTS

In order to enable those skilled in the technical field to better understand the solutions of the present disclosure, the technical solutions in the embodiments of the present disclosure will be described clearly and completely in the following with reference to the accompanying drawings in the embodiments of the present disclosure. Obviously, the described embodiments are only a part of the embodiments of the present disclosure, rather than all of them. Based on the embodiments in the the present disclosure, all other embodiments obtained by those of ordinary skill in the art without creative efforts shall fall within the protection scope of the present disclosure.

It should be understood that the terms "first", "second", etc. in the specification and claims of the present disclosure and the accompanying drawings are used to distinguish different objects and are not used to describe a particular order. In addition, the terms "include", "comprise" and "have", and any variations thereof, are intended to cover non-exclusive inclusion. For example, a process, method, system, product or device including a series of steps or units is not limited to the listed steps or units, but optionally also can include steps or units that are not listed, or optionally can include other steps or units that are inherent to the process, method, product or apparatus.

"Embodiments" in the present disclosure means that particular features, structures, or characteristics described with reference to the embodiments may be included in at least one embodiment of the present disclosure. The presence of the phrase at various places in the specification does not necessarily referring to the same embodiment, nor is it a separate or alternative embodiment that is mutually exclusive of other embodiments. It is understood by those skilled in the art, both explicitly and implicitly, that the embodiments described in the present disclosure may be combined with other embodiments.

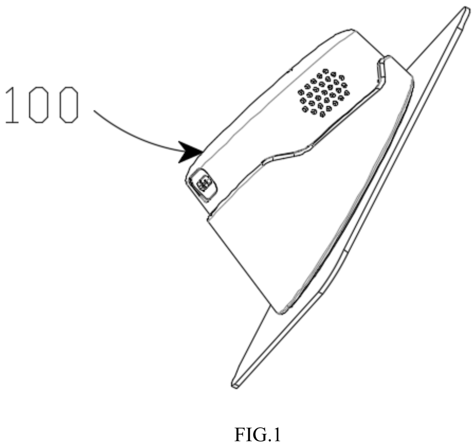

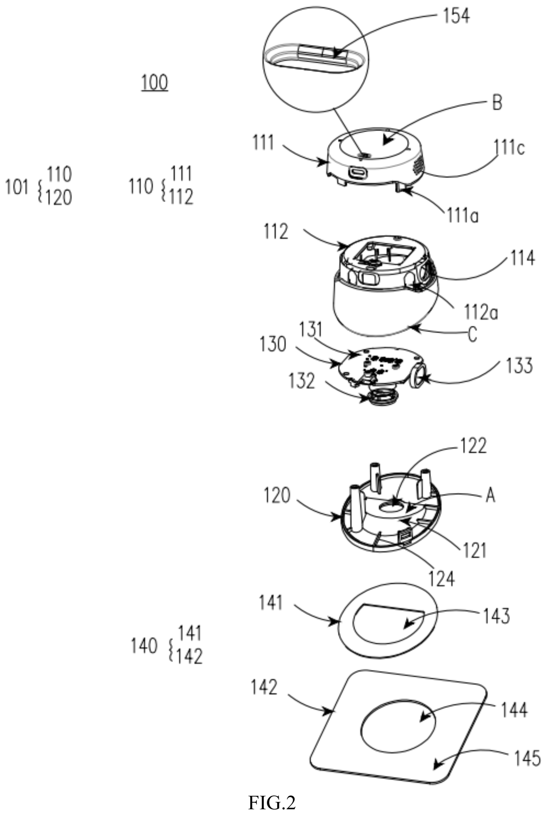

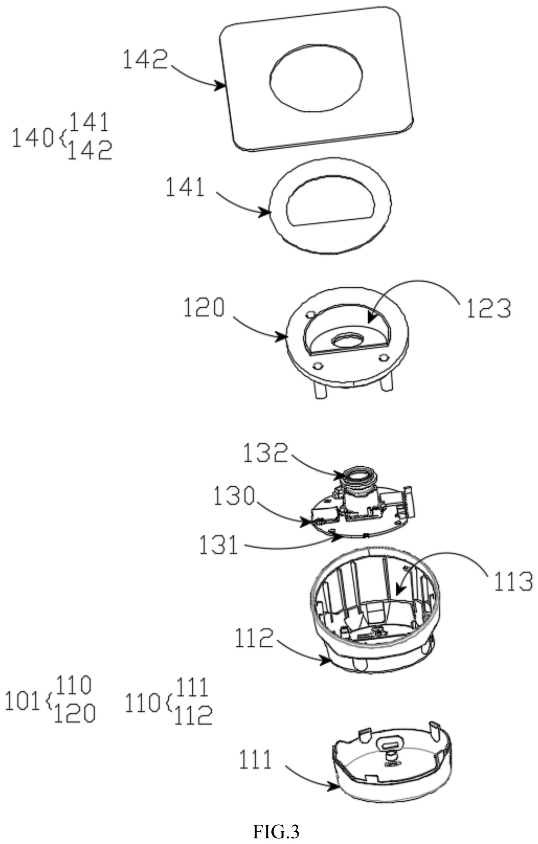

Referring to FIGS. 1 to 3, FIG. 1 illustrates an overall structural view of a camera in accordance with at least one embodiment of the present disclosure; FIG. 2 illustrates an exploded view of the camera shown in FIG. 1; FIG. 3 illustrates another exploded view of the camera shown in FIG. 1. In at least one embodiment, the camera 100 may include a lens assembly 130 and a housing 101. The lens assembly 130 may include a lens 132 and a circuit board assembly 131 connected to the lens 132. The circuit board assembly 131 and the lens 132 work in coordination to perform tasks such as photoelectric conversion, amplification, and optimization of image signals, ensuring the normal operation of the camera 100. The housing 101 may include a first housing 110 and a second housing 120. The first housing 110 and the second housing 120 are connected on opposing sides to form a first accommodating space 113. The lens assembly 130 is received within the first accommodating space 113. A first end surface C of the first housing 110 facing the second housing 120 is inclined relative to a second end surface B of the first housing 110 facing away from the second housing 120. An inclined protrusion 121 located on one side of the second housing 120 facing the first housing 110 protrudes towards the first housing 110. A third end surface A of the inclined protrusion 121 defines a first through hole 122 penetrating through the inclined protrusion 121. The lens 132 extends through the first through hole 122.

The camera 100 described in the present disclosure can be applied to various carriers, such as transparent window glass, transparent vehicle windows, aquarium glass, or the like. The lens 132 captures images on the opposite side of the carrier by shooting through the carrier.

Therefore, by tilting the first end surface C of the first housing 110 toward the second housing 120 and incorporating the inclined protrusion 121 on the second housing 120, the camera 100 achieves an uniquely angled structural layout, thus effectively adapting to diverse installation scenarios, particularly when mounted on elevated transparent surfaces (e.g., second-floor glass), the adjustable shooting angle allows the lens 132 to capture scenes below (e.g., the first floor), and ensuring optimal alignment with the carrier for clear image acquisition, and enhancing the adaptability and flexibility of the camera 100 in complex environments.

Additionally, the first housing 110 and the second housing 120 are interconnected to form the first accommodating space 113, which houses the lens assembly 130, this integrated spatial arrangement optimizes internal layout, providing a stable installation environment for both the lens 132 and the circuit board assembly 131, shielding the lens assembly 130 from external interference and ensuring operational stability of the camera 100. Furthermore, the compact structural design minimizes the overall volume of the camera 100, facilitating installation in confined carrier spaces.

Additionally, the lens 132 is capable of exposing from the first through hole 122 of the inclined protrusion 121 of the second housing 120, and capturing images by shooting through the carrier, ensuring a tight fit and precise alignment between the lens 132 and the carrier, minimizing the impact of light refraction, reflection, and other factors on the captured image, and thus significantly improving the clarity and quality of the images.

In at least one embodiment, please continuing to refer to FIG. 2, the third end surface A of the inclined protrusion 121 is parallel to the second end surface B of the first housing 110 facing away from the second housing 120, and one surface of the second housing 120 facing away from the first housing 110 is fixed to a carrier.

The first end surface C of the first housing 110 facing the second housing 120 is inclined relative to the second end surface B of the first housing 110 facing away from the second housing 120, in cooperating with the inclined protrusion 121 to form an inclined structure, and the inclined structure enables the lens 132 to capture images by shooting through the carrier in a certain angle. For example, when the camera 100 is mounted on the second floor, the inclined structure enables the lens 132 to be inclined downwardly, and effectively monitoring the images in the first floor, without requiring additional complex adjustment mechanisms. The inclined structure itself facilitates perspective adjustment, simplifying the usage process.

Additionally, the parallel arrangement of the second end surface B and the third end surface A ensures precise positioning of the lens assembly 130 within the first accommodating space 113, ensuring that when the lens 132 extends through the first through hole 122 of the inclined protrusion 121, an optical axis of the lens 132 maintains a stable and reasonable angle, preventing abnormal light refraction or lens misalignment due to structural asymmetry, and ensuring clear imaging through the carrier, reducing issues such as blurring or distortion and improving overall image quality.

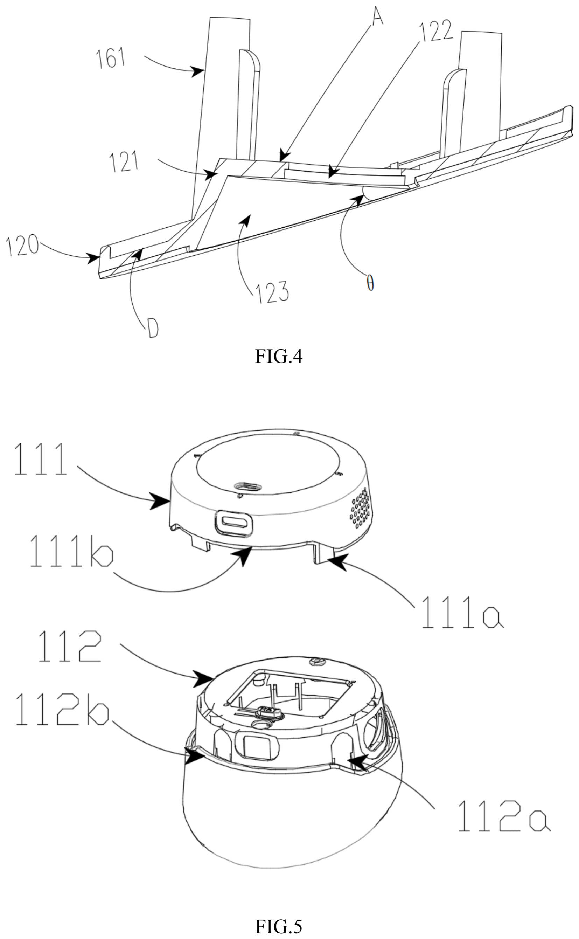

In at least one embodiment, referring to FIGS. 3 and 4, FIG. 4 illustrates a cross-sectional view of a partial structure of the camera shown in FIG. 2. The third end surface A of the inclined protrusion 121 forms an angle θ with the fourth end surface D of the second housing 120 facing the first housing 110. The surface of the second housing 120 facing the carrier forms a second accommodating space 123, and the lens 132 extends through the first through hole 122 of the inclined protrusion 121 and is received within the second accommodating space 123.

Here, the lens 132 extends through the first through hole 122 of the inclined protrusion 121 and is received within the second accommodating space 123, the second accommodating space 123 provides additional protection for the lens 132 against external factors (such as dust, moisture, or impact), and prolongs the service life of the lens 132.

In at least one embodiment, the angle θ between the third end surface A of the inclined protrusion 121 and the fourth end surface D of the second housing 120 ranges from 0° to 20°, allowing the lens 132 to be installed at a specific tilt angle. For instance, when the camera 100 is mounted at a higher position (e.g., the second floor), this tilt angle enables the lens 132 to incline downwardly to a certain degree, effectively expanding the monitoring range and ensuring clear imaging of the first floor.

In at least one embodiment, the tilt angle of the lens 132 can be fine-tuned according to actual installation scenarios and monitoring requirements to achieve optimal imaging performance, ensuring that the camera 100 can adapt to different heights, installation positions, and monitoring targets, enhancing the versatility, the adaptability, and the application scope of the camera 100.

In at least one embodiment, please continuing to refer to FIG. 2, the first housing 110 may include a first sub-housing 111 and a second sub-housing 112, and the first sub-housing 111 is sleeved and fixed on one end of the second sub-housing 112. The sleeved structure forms a tight and interlocking fit, allowing the first sub-housing 111 and the second sub-housing 112 to mutually support each other, thereby enhancing the overall structural strength and stability of the first housing 110, effectively resisting external forces such as impacts or compression, protecting the lens assembly 130 inside the first housing 110 and ensuring the lens assembly 130 to be perform safely. Additionally, the sleeved structure enables a seamless transition between the edges of the first sub-housing 111 and the second sub-housing 112, creating a smooth and aesthetically pleasing exterior contour, and enhancing the visual appeal of the camera 100.

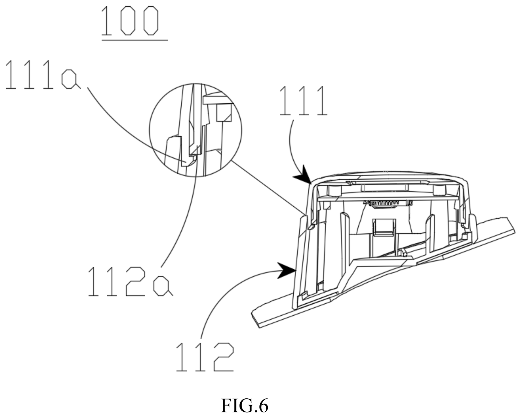

Referring to FIGS. 5 and 6, FIG. 5 illustrates a partial exploded structural view (1) of the camera shown in FIG. 2; FIG. 6 illustrates a cross-sectional view of the camera shown in FIG. 1. In at least one embodiment, the first sub-housing 111 may include at least one first snap structure 111a spaced apart, and an outer peripheral wall of the second sub-housing 112 may include at least one second snap structure 112a that engage with the at least one first snap structure 111a respectively; when the first snap structure 111a is engaged with in the second snap structure 112a, the first sub-housing 111 and the second sub-housing 112 are fixedly connected.

FIG. 6 illustrates a structure of the first snap structure 111a engaging with the second snap structure 112a. When assembling the first housing 110, the first sub-housing 111 is sleeved on one end of the second sub-housing 112, the first snap structure 111a is aligned with the second snap structure 112a, and then the first snap structure 111a is pressed to engage with the second snap structure 112a, so as to complete the connection, significantly improving production efficiency.

Once the first snap structure 111a is engaged with the second snap structure 112a, the first snap structure 111a and the second snap structure 112a form a tight fit that effectively resists external forces, preventing relative displacement or loosening between the first sub-housing 111 and the second sub-housing 112, ensuring the structural integrity of the first housing 110, providing reliable protection for the internal lens assembly 130 and reducing the risk of lens misalignment or damage due to the instability between the first sub-housing 111 and the second sub-housing 112, thereby maintaining the normal operation and service life of the camera 100.

Furthermore, when maintenance, part replacement, or cleaning is required, a moderate force can disengage the first snap structure 111a from the second snap structure 112a, allowing easy separation of the first sub-housing 111 and the second sub-housing 112, facilitating servicing while reducing maintenance costs and complexity. Notably, the first snap structure 111a and the second snap structure 112a are concealed within the sleeved structure of the first sub-housing 111 and the second sub-housing 112, avoiding visible protrusions or gaps on the exterior of the camera 100, resulting in a sleek and seamless appearance of the first housing 110, and enhancing both aesthetics and integration of the camera 100, thus making the camera 100 have good visual appearance in diverse application scenarios.

Here, the number of the first snap structures 111a and the second snap structures 112a can be adjusted as needed without specific limitation.

Please continuing to refer to FIG. 5, in at least one embodiment, the second sub-housing 112 may include a first positioning edge 112b on one side facing the first sub-housing 111, the first positioning edge 112b is stepped; the first sub-housing 111 may include a second positioning edge 111b on one side facing the second sub-housing 112 that matches the first positioning edge 112b; when the first positioning edge 112b and the second positioning edge 111b are in contact, the first sub-housing 111 and the second sub-housing 112 are connected.

When the first positioning edge 112b and the second positioning edge 111b are in contact, the first positioning edge 112b and the second positioning edge 111b cooperatively form a close-fitting structure, the stepped edges of the first positioning edge 112b and the second positioning edge 111b increase the contact area, distributing and withstanding external forces more effectively to prevent rotation or misalignment between the first sub-housing 111 and second sub-housing 112 during use, enhancing the overall stability of the first housing 110. During assembly, the stepped edges of the first positioning edge 112b and the second positioning edge 111b provides clear alignment guides for the first positioning edge 112b and the second positioning edge 111b, enabling the first positioning edge 112b and the second positioning edge 111b to quick and precise position to improve mounting efficiency. Moreover, this connection method ensures a smooth transition between the first positioning edge 112b and the second positioning edge 111b, the exterior appears more flush and streamlined, without noticeable gaps or abrupt joint marks.

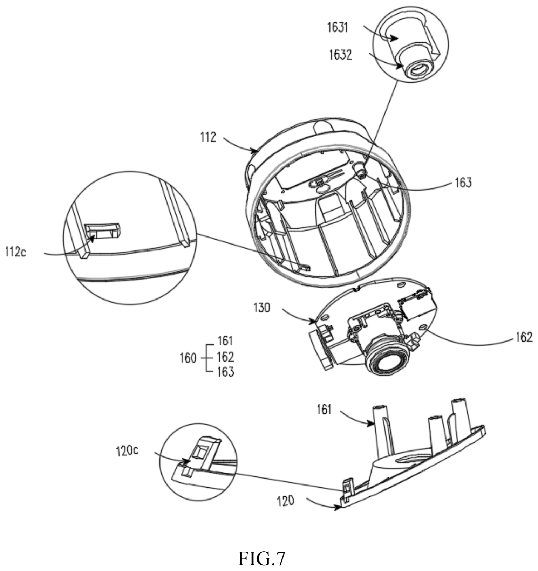

Referring to FIG. 7, FIG. 7 illustrates a partial exploded structural view (2) of the camera shown in FIG. 2. In at least one embodiment, an inner peripheral wall of the second sub-housing 112 may include at least one protrusion structure 112c spaced apart, the protrusion structure 112c extends radially inward from the inner peripheral wall of the second sub-housing 112; an outer peripheral wall of the second housing 120 may include at least one third snap structure 120c that engages with the at least one protrusion structure 112c respectively; when the protrusion structure 112c is engaged with the third snap structure 120c, the second sub-housing 112 and the second housing 120 are fixedly connected..

Here, the protrusion structure 112c is engaged with the third snap structure 120c to achieve the connection between the second sub-housing 112 and the second housing 120. During assembly, the second sub-housing 112 is aligned with the second housing 120, and the second sub-housing 112 or the second housing 120 is pressed such that the protrusion structure 112c is engaged with the third snap structure 120c. Furthermore, the protrusion structure 112c extends along a radial direction of the second sub-housing 112 inwardly, and then embeds the third snap structure 120c, achieving a tight fit, resisting separation or wobbling under external forces, ensuring a robust linkage between the second sub-housing 112 and the second housing 120, and maintaining the structural stability of the camera 100 and providing reliable protection for the internal components like the lens assembly 130, and reducing the risk of malfunctions caused by loose connections.

Additionally, when the camera 100 needs to be maintained or replaced certain components, the disengageable characteristic between the second sub-housing 112 and the second housing 120 allows the protrusion structure 112c to be easily detached from the third snap structure 120c through simple operation, enabling removal of the second sub-housing 112, facilitating internal inspection, cleaning, and other servicing operations, significantly reducing maintenance difficulty and associated costs.

Returning to FIG. 2, in at least one embodiment, the lens assembly 130 may further include a microphone 133. The microphone 133 is mounted on one end of the lens assembly 130 facing the second sub-housing 112 and fixed to the circuit board assembly 131.

In at least one embodiment, the second sub-housing 112 defines a second through hole 114 penetrating therethrough. The second through hole 114 is located on an inner peripheral wall of the second sub-housing 112 facing the lens assembly 130 and corresponding to a position of the microphone 133. The first sub-housing 111 defines at least one voice port 111c that corresponds to the second through hole 114 of the second sub-housing 112. When the first sub-housing 111 and second sub-housing 112 are connected, the microphone 133, the second through hole 114, and the at least one voice port 111c are precisely aligned.

Therefore, the second through hole 114 of the second sub-housing 112, the at least one voice port 111c of the first sub-housing 111, and the microphone 133 are precisely aligned, allowing external sound to pass unobstructed through the voice port 111c and the second through hole 114 to reach the microphone 133, minimizing acoustic transmission obstructions and signal attenuation, thereby enhancing sound capture clarity to meet the high-fidelity audio requirements of surveillance applications. Furthermore, if the camera 100 supports voice output, processed audio signals from the microphone 133 and the circuit board assembly 131 can be clearly transmitted through the same channels, enabling effective voice broadcasting.

Additionally, the microphone 133 is mounted in the camera 100, and is interconnected with the external environment through the second through hole 114 in the second sub-housing 112. The housing 101 also provides protection for the microphone 133, preventing direct contact with external contaminants such as dust, moisture, and others, thereby reducing the risk of damage from environmental factors, extending the service life of the microphone 133, and avoiding interference with sound capture and playback quality due to entered external contaminants.

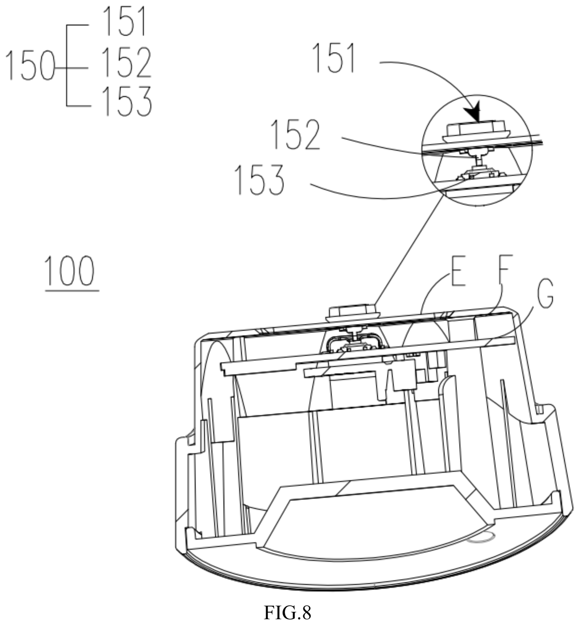

Please referring to FIG. 8, FIG. 8 illustrates another cross-sectional view of the camera shown in FIG. 1. In at least one embodiment, the camera 100 may further include a reset assembly 150. The reset assembly 150 may include a reset button 151, a trigger actuator 152, and a reset functional component 153. The reset button 151 is located on a fifth end surface E of the second sub-housing 112 facing the first sub-housing 111. The trigger actuator 152 is located on a sixth end surface F of the second sub-housing 112 facing away from the first sub-housing 111. The reset functional component 153 is located on a seventh end surface G of the circuit board assembly 131 facing the second sub-housing 112. Projections of the reset button 151, the trigger actuator 152, and the reset functional component 153 on the seventh end surface of the circuit board assembly 131 at least partially overlap.

The reset button 151 is pressable. When the reset button 151 is pressed, the reset button 151 drives the trigger actuator 152 to produce displacement or deformation, which in turn activates the reset functional component 153 to restore the camera 100 to its preset initial operating state.

In at least one embodiment, please referring to FIG. 2, the first sub-housing 111 defines a reset hole 154. The reset hole 154 aligns with the reset button 151. When the first sub-housing 111 and the second sub-housing 112 are connected, the reset button 151 protrudes through the reset hole 154.

The reset button 151 is exposed from the first sub-housing 111 through the reset hole 154, allowing users to quickly position and operate. Pressing operations can be performed without complex disassembly steps, enabling the trigger actuator 152 to respond promptly and activate the reset functional component 153, thereby restoring the camera 100 to its preset initial working state swiftly.

Additionally, the reset button 151, the trigger actuator 152, and the reset functional component 153 are respectively arranged on the fifth end surface E of the second sub-housing 112, the sixth end surface F of the second sub-housing 112 and the seventh end surface of the circuit board assembly 131, with their projections aligned. This layout makes full use of the limited internal space of the camera 100, ensuring a rational arrangement without occupying additional large spaces, which is conducive to the integrated design of the camera 100.

Please continue to refer to FIG. 7. In at least one embodiment, the camera 100 may further include a positioning structure 160. The positioning structure 160 may include a first connecting column 161, a connection through hole 162, and a second connecting column 163. The first connecting column 161 is located on one side of the second housing 120 facing the first housing 110. The connection through hole 162 is defined on the lens assembly 130 at a position corresponding to the first connecting column 161. The second connecting column 163 is located on one side of the second sub-housing 112 facing the second housing 120. The second connecting column 163 may include a connecting end 1632. When the second sub-housing 112 is connected to the second housing 120, the first connecting column 161 abuts the connection through hole 162, and the connecting end 1632 of the second connecting column 163 passes through the connection through hole 162 to connect with the first connecting column 161.

Therefore, during assembly, the first connecting column 161 abuts and aligns the connection through hole 162, and the connecting end 1632 of the second connecting column 163 passes through the connection through hole 162 to connect with the first connecting column 161, ensuring that the first connecting column 161, the connection through hole 162, and the second connecting column 163 can be quickly and accurately aligned, avoiding misalignment of internal structures due to assembly errors and guaranteeing that the lens assembly 130 is in an optimal working position. Simultaneously, during the connection process, the connecting end 1632 of the second connecting column 163 forms a stable connection with the first connecting column 161, combining with the limiting effect of the connection through hole 162, the second housing 120, the lens assembly 130, and the second sub-housing 112 are combined into a cohesive unit, effectively dispersing external forces, enhancing the connection strength between the second housing 120, the lens assembly 130, and the second sub-housing 112, reducing loosening or separation caused by factors such as vibration or impact, and providing reliable structural support for the internal components of the camera 100.

Moreover, when assembling the camera 100, installation can be completed simply by following the corresponding relationship of the positioning structure 160, eliminating the need for repeated adjustments of component positions and facilitating the assembly process.

In at least one embodiment, the second connecting column 163 may further include a main body portion 1631. The connecting end 1632 is located at one end of the main body portion 1631. A diameter of the main body portion 1631 is larger than that of the connection through hole 162, while a diameter of the connecting end 1632 is smaller than or equal to that of the connection through hole 162, allowing the connecting end 1632 to pass through the connection through hole 162 and connect with the first connecting column 161. The diameter of the connecting end 1632 is also smaller than that of the first connecting column 161.

In at least one embodiment, the first connecting column 161 extends toward the first housing 110. A shape of the connection through hole 162 matches that of the first connecting column 161. Projections of the first connecting column 161, the connection through hole 162, and the second connecting column 163 on the third end face of the inclined protrusion 121 at least partially overlap, providing clear positioning references during assembly and simplifying the process.

Please continue to refer to FIG. 2. In at least one embodiment, the fourth end face of the second housing 120 facing the first housing 110 may include at least one reinforcing rib 124. One end of the reinforcing rib 124 is connected to an outer peripheral wall of the second housing 120, and the other end of the reinforcing rib 124 extends inward toward to connect to a corresponding inner portion of the second housing 120.

Here, one end of the reinforcing rib 124 is connected to an outer peripheral wall of the second housing 120, and the other end of the reinforcing rib 124 extends inward toward to connect to a corresponding inner portion of the second housing 120, effectively integrating the outer peripheral wall and internal structure of the second housing 120 into a more stable whole. For example, when the camera 100 is subjected to external forces (such as collision or compression), the reinforcing rib 124 can disperse and transmit these forces, reducing stress on local areas of the housing 110 and preventing deformation or breakage of the second housing 120, thus enhancing the overall strength and stability of the camera 100, providing reliable protection for internal components such as the lens assembly 130.

In at least one embodiment, the first sub-housing 111 and second sub-housing 112 can be set to different colors. Therefore, this color contrast design adds a sense of layering to the appearance of the camera 100, improving aesthetic appeal of the camera 100 and thus further improving decorative effect of the camera 100.

In at least one embodiment, the housing 101 can be made of materials such as plastic, metal, or composite materials. The material of the housing 101 can be selected based on practical requirements, with no specific limitations here.

The first sub-housing 111 and the second sub-housing 112 can also be made of different materials. For example, the first sub-housing 111 can be made of lightweight materials with good heat dissipation, such as aluminum alloy, which can quickly dissipate heat generated by the lens assembly 130 during operation, effectively preventing performance degradation due to high temperatures, and the surface of the aluminum alloy can undergo treatment to enhance its appearance and corrosion resistance. Meanwhile, the second sub-housing 112 can be made of easily moldable materials such as plastic, allowing the second sub-housing 112 to meet the shape and structural requirements of the tilted layout of the camera 100, further improving the overall performance of the camera 100.

In at least one embodiment, please continue to refer to FIG. 2. The camera 100 can further include a connecting member 140. The connecting member 140 is located between the second housing 120 and the carrier, and is configured to mount the camera 100 onto a surface of the carrier. The connecting member 140 fixes the second housing 120 to the carrier through at least one of magnetic attraction, adhesion, hook-and-loop fasteners, or vacuum suction.

Here, the connecting member 140 can fix the second housing 120 to the carrier through ways such as magnetic attraction, adhesion, hook-and-loop fasteners, or vacuum suction, providing users with a variety of installation options. Depending on actual needs, multiple fixing ways can be combined to ensure the camera 100 is firmly mounted on the carrier. Additionally, the connecting member 140 provides multiple installation methods, making the camera 100 suitable for various types of carriers, including but not limited to glass, metal, plastic, wood, and the like.

In at least one embodiment, the connecting member 140 may include a first connecting member 141 and a second connecting member 142. The first connecting member 141 and second connecting member 142 are sequentially arranged between the second housing 120 and the carrier. One side of the first connecting member 141 facing the second housing 120 is adhered to the second housing 120 via an adhesive, and one side of the second connecting member 142 facing the carrier is adhered to the carrier via an adhesive. When the other side of the first connecting member 141 facing the second connecting member 142 and the other side of the second connecting member 142 facing the first connecting member 141 are in contact and connected, the camera 100 is fixed to the carrier. When the other side of the first connecting member 141 facing the second connecting member 142 and the other side of the second connecting member 142 facing the first connecting member 141 are separated, the camera 100 is detached from the carrier.

Here, traditional camera installation methods often require drilling holes in the carrier. However, when the carrier is transparent glass or made of special materials, drilling is highly demanding and may cause the glass to crack, compromising its aesthetics and strength. In this embodiment, installation methods such as hook-and-loop fasteners (using adhesive layers), magnetic attraction (using magnetic force), adhesion (using high-performance glue), or vacuum suction (using vacuum force) eliminate the need for drilling, significantly reducing the difficulty and risk of installation, fundamentally avoiding damage to the glass structure, and preserving the smooth, transparent, and aesthetically pleasing surface of the glass while maintaining the physical properties, strength, and stability of the glass, extending the service life of the glass. Moreover, installation does not require specialized drilling equipment or skills, making the process of mounting the camera 100 easier and improving the user experience.

By pre-attaching the first connecting member 141 and the second connecting member 142 to the second housing 120 and carrier, respectively, when mounting, installation simply involves connecting the first connecting member 141 and the second connecting member 142. When adjustments, maintenance, or replacements for the camera 100 are needed, users can easily detach the camera 100 by separating the first connecting member 141 and second connecting member 142, making the camera 100 more flexible and convenient to use, further enhancing the user experience.

In at least one embodiment, when the installation method involves hook-and-loop fasteners, one side of the first connecting member 141 facing the second housing 120 is tightly adhered to a predetermined position on the second housing 120 with adhesive, and firm pressure is applied to fully activate the adhesive, ensuring the first connecting member 141 is securely fixed to the second housing 120. Simultaneously, the side of the second connecting member 142 facing the carrier is adhered to the surface of the carrier with adhesive, and appropriate pressure is applied to ensure the second connecting member 142 is firmly attached to the carrier. The assembled camera 100 is then brought close to the carrier. The other side of the first connecting member 141 facing away from the second housing 120 is hook surface, while the other side of the second connecting member 142 facing away from the carrier is loop surface. Aligning the hook surface and the loop surface and appropriate pressure is applied to ensure a secure connection between the hook surface and the loop surface, completing the installation of the camera 100.

For removal, the first connecting member 141 and the second connecting member 142 are separated, disengaging the hook surface and loop surface, allowing the camera 100 to be detached from the carrier.

In at least one embodiment, when the installation method involves adhesion, adhesive is evenly applied to the corresponding positions of the first connecting member 141 and second connecting member 142. The first connecting member 141 and the second connecting member 142 are precisely aligned and connected, and appropriate pressure is applied to complete the installation of the camera 100. For removal, a specialized solvent is used to dissolve or weaken the adhesive, allowing the first connecting member 141 and second connecting member 142 to be separated.

In at least one embodiment, when the installation method involves magnetic attraction, the first connecting member 141, embedded with a magnet, is attached to the second housing 120 using adhesive or other methods. The second connecting member 142, embedded with a corresponding opposite-polarity magnet, is attached to the carrier. During installation, the two magnets automatically attract and align under magnetic force, completing the installation. For removal, the first connecting member 141 and the second connecting member 142 are separated along a direction perpendicular to the magnetic force.

In at least one embodiment, when the installation method involves vacuum suction, the second connecting member 142 is adhered to the surface of the carrier with adhesive, and the first connecting member 141 is attached to the second housing 120 of the camera 100. The first connecting member 141 contains a silicone vacuum suction cup, and the second connecting member 142 has a corresponding flat surface. During installation, the suction cup of the first connecting member 141 is aligned with the second connecting member 142 and pressed firmly to ensure a tight seal to the second connecting member 142, and there are no gaps between the first connecting member 141 and the second connecting member 142. As air is gradually expelled, a vacuum forms between the first connecting member 141 and the second connecting member 142, causing the first connecting member 141 and the second connecting member 142 to tightly adhere under atmospheric pressure. For removal, air is allowed to re-enter, equalizing the air pressure between the suction cup and the second connecting member 142, and releasing the suction, allowing the first connecting member 141 and second connecting member 142 to be separated and the camera 100 to be detached. In other embodiment, the second connecting member 142 can be omitted, and the flat surface can be the carrier itself.

Additionally, with these installation methods, if the camera 100 is found to be misaligned on the carrier, there is no need to peel off the adhesive and damage the surface. Instead, the connection between the first connecting member 141 and the second connecting member 142 can be separated, the camera 100 repositioned to ensure the lens 132 is at the correct angle, and the first connecting member 141 and the second connecting member 142 reattached. The installation methods of the camera 100 are not limited to the above and can be adjusted based on actual requirements, with no specific limitations here.

In at least one embodiment, the camera 100 can also be connected to the carrier via the first end face of the first housing 110 opposite the second housing 120. Here, the carrier may include indoor walls, partitions, etc., allowing the camera 100 to capture scenes inside the carrier, such as indoor spaces.

When the first end face of the first housing 110 opposite the second housing 120 is connected to the carrier, the first connecting member 141 of the connecting member 140 can be attached to the first end face, and the second connecting member 142 can be attached to opaque carriers like walls. Connection is achieved through magnetic attraction, adhesion, hook-and-loop fasteners, or vacuum suction, completing the installation of the camera 100. The angle and field of view of the lens 132 can be adjusted based on indoor layouts and monitoring needs to ensure full coverage of the desired area.

If misalignment occurs during installation, the connecting member 140 can be separated and reattached to adjust the position and the angle of the camera 100, ensuring optimal imaging.

Therefore, the camera 100 of the present disclosure can be installed in different ways based on practical needs. For example, depending on monitoring requirements in different scenarios, the camera 100 can be connected to the carrier via the second housing 120 or the first housing 110, further enhancing its applicability, flexibility, and monitoring effectiveness.

In at least one embodiment, please continue to refer to FIG. 2. The first connecting member 141 defines a third through hole 143 penetrating therethrough. Projections of the second accommodating space 123 on the first connecting member 141 falls within an area of the third through hole 143.

Therefore, the lens 132 passes through the first through hole 122 of the second housing 120 and is accommodated in the second accommodating space 123. The third through hole 143 ensures the field view of the lens 132 is not obstructed by the first connecting member 141, allowing the camera 100 to capture complete images during shooting, preventing missing or blurred areas due to blocking by the connecting member 140, and ensuring image integrity and clarity, thereby improving monitoring or shooting results.

During the installation of the camera 100, the first housing 110 is assembled first. The first sub-housing 111 is fitted over the second sub-housing 112, with the first snap structure 111a being engaged with the second snap structure 112a, ensuring the first positioning edge 112b and the second positioning edge 111b are tightly connected. The lens assembly 130 is then placed in the predetermined position within the first housing 110, aligning the lens 132 with the first through hole 122 of the second housing 120. The protrusion structure 112c and the third snap structure 120c are engaged to connect the second housing 120 to the first housing 110, allowing the lens 132 to pass through the first through hole 122 into the second accommodating space 123. The positioning structure 160 ensures precise alignment of all components. Next, based on the carrier material and usage needs, a suitable connecting member 140 installation method is chosen. For example, with a hook-and-loop fastener, the first connecting member 141 is adhered to the second housing 120, ensuring the projection of the second accommodating space 123 falls within the third through hole 143. The second connecting member 142 is adhered to the carrier, and the first connecting member 141 and the second connecting member 142 are joined to complete the installation of the camera 100 on the carrier. During the assembly of the first sub-housing 111 and the second sub-housing 112, the voice port 111c, the second through hole 114, and the microphone 133 are aligned.

Here, through multiple structures such as the first snap structure and the second snap structure, the protrusion structure and the third snap structure, and the first connecting column, the connection through hole, and the second connecting column, along with the reinforcing ribs 124, the overall structure of the camera 100 is tight, effectively resisting external impacts and vibrations, providing reliable protection for inner components like the lens assembly 130, ensuring the long-term stable operation of the camera 100.

In at least one embodiment, please continue to refer to FIG. 2. The second connecting member 142 defines a fourth through hole 144 penetrating therethrough and a light-shielding portion 145 surrounding the fourth through hole 144. A ratio of an outer diameter of the light-shielding portion 145 to an outer diameter of the lens 132 is 2:1 to 30:1.

In usage scenarios where the camera 100 is installed on a special carrier like double-layered glass, the gap between the two glass panes can cause light from indoors to reflect multiple times off the glass surface and enter the lens 132, creating glare that severely affects image quality. The light-shielding portion 145 blocks most stray light entering from indoor angles, physically preventing light that might reflect off the carrier surface from reaching the lens 132.

For example, when the installation method involves hook-and-loop fasteners, the light-shielding portion 145 is the hook surface of the hook-and-loop fastener. The material and surface properties of the hook-and-loop fastener also absorb some light, further reducing the likelihood of glare.

By maintaining a ratio f the outer diameter light-shielding portion 145 to the outer diameter of the lens 132 ratio within 2:1 to 30:1, sufficient light-blocking is achieved without excessively obstructing the normal field of view, ensuring the lens 132 only receives effective light, reducing reflections and avoiding issues like glare or ghosting, and resulting in clear, pure images. The appropriate size of the light-shielding portion 145 also increases the attachment area of the second connecting member 142 to the carrier, enhancing overall stability.

In at least one embodiment, the camera 100 may further include an angle adjustment mechanism. The angle adjustment mechanism is located within the housing 101 and is configured to adjust a tilt angle of the lens 132, allowing the users to adjust the lens angle based on monitoring needs. For example, a manual adjustment structure can be added to the first sub-housing 111, with an internal rotatable support connected to the lens assembly 130. An adjusting knob penetrating through the first sub-housing 111, connected to the support via a gear set, allows users to rotate the adjusting knob to change the tilt angle of the lens 132.

Alternatively, motor-driven adjustment can be implemented to adjust the tilt angle of the lens 132. For example, a micro motor is located inside the first sub-housing 111, an output shaft of the motor is connected to the gear set. By controlling the rotating direction and the step count of the motor, the support can be driven to rotate, and the tilt angle of the lens 132 can be thus changed. Meanwhile, users can remotely adjust the tilt angle of the lens 132 via a mobile app, Bluetooth, or a remote control platform based on actual monitoring needs, eliminating the need for manual operation and significantly improving convenience.

In at least one embodiment, the angle adjustment mechanism may also include a limit structure. For example, a limit member is located on a rotation path of the support, when the support is rotated to a maximum or minimum tilt angle, the limit member prevents over-rotation, avoiding damage to inner structure of the camera 100 due to over-adjustment. An angle sensor is located in the motor system to monitor the lens angle and provide feedback to the control system, automatically stopping the motor at preset limits to ensure accuracy and reliability.

Therefore, integrating the angle adjustment mechanism into the housing 101 allows users to quickly adjust the lens angle manually or remotely, ensuring precise coverage of target areas for efficient, flexible monitoring.

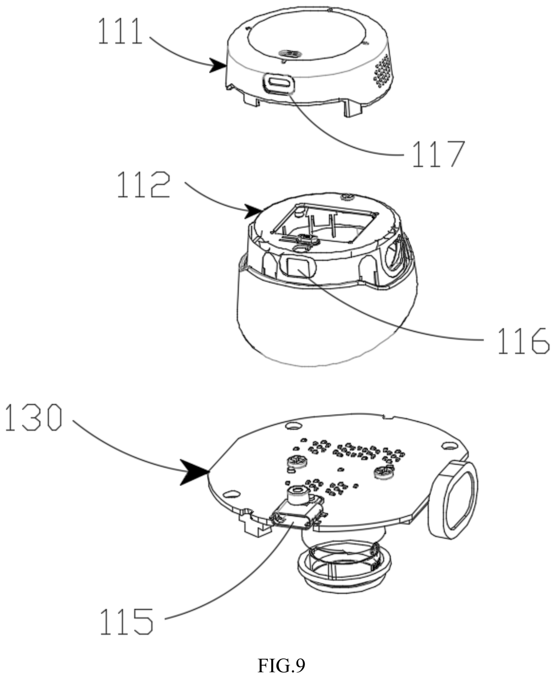

In at least one embodiment, please refer to FIG. 9, FIG. 9 illustrates a partial exploded structural view (3) of the camera shown in FIG. 2. The camera 100 may further include a charging port 115. The charging port 115 is located on the circuit board assembly 131. The second sub-housing 112 defines a fifth through hole 116 at a corresponding position. The first sub-housing 111 defines a sixth through hole 117 at a corresponding position. The fifth through hole 116 and the sixth through hole 117 both match the shape of the charging port 115. When the camera 100 connects to an external device, a connector of the external device passes through the sixth through hole 117 and the fifth through hole 116 to engage with the charging port 115.

Therefore, when the camera 100 requires charging or data transmission, the connection interface of the external device can pass through the sixth through hole 117 and the fifth through hole 116 to quickly engage with the charging port 115, eliminating the need for complex disassembly operations, facilitating daily charging or rapid transfer of surveillance data from the camera 100, thereby significantly enhancing user convenience.

The descriptions of each embodiment have their own emphasis. For parts not detailed in a particular embodiment, reference can be made to the relevant descriptions in other embodiments. The embodiments of the present disclosure have been described in detail above, and specific examples have been used to explain the principles and implementation methods of the present disclosure. The descriptions of the above embodiments are intended to help understand the methods and core ideas of the present disclosure. At the same time, for those of ordinary skill in the art, based on the ideas of the present disclosure, there may be changes in specific implementation methods and application scopes. In summary, the content of this specification should not be construed as limiting the application. Any modifications, equivalent replacements, and improvements made within the spirit and principles of the above embodiments shall be included within the protection scope of the technical solution.

## Claims

1. A camera (100), comprising:
a lens assembly (130), comprising a lens (132) and a circuit board assembly (131) connected to the lens;
a housing (101), comprising a first housing (110) and a second housing (120), wherein the first housing and the second housing are connected on opposing sides to form a first accommodating space (113); the lens assembly is received within the first accommodating space; a first end surface (C) of the first housing facing the second housing is inclined relative to a second end surface (B) of the first housing facing away from the second housing; an inclined protrusion (121) located on one side of the second housing facing the first housing protrudes towards the first housing; a third end surface (A) of the inclined protrusion defines a first through hole (122) penetrating through the inclined protrusion; the lens extends through the first through hole.

2. The camera according to claim 1, wherein: the third end surface of the inclined protrusion is parallel to the second end surface of the first housing facing away from the second housing; and one surface of the second housing facing away from the first housing is fixed to a carrier.

3. The camera according to claim 2, wherein: the third end surface of the inclined protrusion forms an angle (θ) with a fourth end surface (D) of the second housing facing the first housing, and one side of the second housing facing the carrier forms a second accommodating space (123); the lens extends through the first through hole on the inclined protrusion and is received within the second accommodating space.

4. The camera according to claim 3, wherein: the angle between the third end surface of the inclined protrusion and the fourth end surface of the second housing ranges from 0° to 20° .

5. The camera according to claim 1, wherein: the first housing (110) comprises a first sub-housing (111) and a second sub-housing (112), and the first sub-housing is sleeved and fixed on one end of the second sub-housing.

6. The camera according to claim 5, wherein: the first sub-housing comprises at least one first snap structure (111a) spaced apart, and an outer peripheral wall of the second sub-housing comprises at least one second snap structure (112a) that engage with the at least one first snap structure respectively; when the first snap structure is engaged with in the second snap structure, the first sub-housing and the second sub-housing are fixedly connected.

7. The camera according to claim 5, wherein: the second sub-housing comprises a first positioning edge (112b) on one side facing the first sub-housing, the first positioning edge is stepped; the first sub-housing comprises a second positioning edge (111b) on one side facing the second sub-housing that matches the first positioning edge; when the first positioning edge and the second positioning edge are in contact, the first sub-housing and the second sub-housing are connected.

8. The camera according to claim 5, wherein: an inner peripheral wall of the second sub-housing comprises at least one protrusion structure (112c) spaced apart, the protrusion structure extends radially inward from the second sub-housing; an outer peripheral wall of the second housing comprises at least one third snap structure (120c) that engages with the at least one protrusion structure respectively; when the protrusion structure is engaged with the third snap structure, the second sub-housing and the second housing are fixedly connected.

9. The camera according to claim 5, wherein: the camera further comprises a reset assembly (150); the reset assembly (150) comprises a reset button(151), a trigger actuator (152), and a reset functional component (153); the reset button is located on a fifth end surface (E) of the second sub-housing facing the first sub-housing, the trigger actuator is located on a sixth end surface (F) of the second sub-housing facing away from the first sub-housing, and the reset functional component is located on a seventh end surface (G) of the circuit board assembly facing the second sub-housing; projections of the reset button, the trigger actuator, and the reset functional component on the seventh end surface of the circuit board assembly at least partially overlap.

10. The camera according to claim 5, wherein: the camera further comprises a positioning structure (160); the positioning structure comprises a first connecting column (161), a connection through hole (162), and a second connecting column (163); the first connecting column is located on one side of the second housing facing the first housing, the connection through hole is defined on the lens assembly at a position corresponding to the first connecting column, and the second connecting column is located on one side of the second sub-housing facing the second housing; the second connecting column comprises a connecting end (1632); when the second sub-housing is connected to the second housing, the first connecting column abuts and aligns the connection through hole, and the connecting end of the second connecting column passes through the connection through hole to connect with the first connecting column.

11. The camera according to claim 10, wherein: the second connecting column further comprises a main body portion (1631); the connecting end is located at one end of the main body portion; a diameter of the main body portion is larger than that of the connection through hole, and a diameter of the connecting end is smaller than or equal to that of the connection through hole, the connecting end passes through the connection through hole and connect with the first connecting column; the diameter of the connecting end is also smaller than that of the first connecting column.

12. The camera according to claim 11, wherein: the first connecting column extends toward the first housing, a shape of the connection through hole matches that of the first connecting column, and projections of the first connecting column, the connection through hole, and the second connecting column on the third end surface of the inclined protrusion at least partially overlap.

13. The camera according to claim 1, wherein: the camera further comprises a connecting member (140); the connecting member is located between the second housing and a carrier and is configured to mount the camera onto a surface of the carrier; the connecting member fixes the second housing to the carrier by at least one of magnetic attraction, adhesion, hook-and-loop fasteners, or vacuum suction.

14. The camera according to claim 13, wherein: the connecting member comprises a first connecting member (141) and a second connecting member (142); the first connecting member and the second connecting member are sequentially arranged between the second housing and the carrier; one side of the first connecting member facing the second housing is adhered to the second housing via an adhesive, and one side of the second connecting member facing the carrier is adhered to the carrier via an adhesive; when the other side of the first connecting member facing the second connecting member and the other side of the second connecting member facing the first connecting member are in contact and connected, the camera is fixedly connected to the carrier; when the other side of the first connecting member facing the second connecting member and the other side of the second connecting member facing the first connecting member are separated, the camera is detached from the carrier.

15. The camera according to claim 13, wherein: the second connecting member defines a fourth through hole (144) penetrating therethrough and a light-shielding portion (145) surrounding the fourth through hole; a ratio of an outer diameter of the light-shielding portion to an outer diameter of the lens of the camera is between 2:1 and 30:1.
